Europäisches Patentamt

European Patent Office

Office européen des brevets

(19)

(11) **EP 0 783 731 B1**

(12) **EUROPÄISCHE PATENTSCHRIFT**

| | |
|---|---|
| (45) Veröffentlichungstag und Bekanntmachung des Hinweises auf die Patenterteilung: **06.05.1999 Patentblatt 1999/18** | (51) Int Cl.[6]: **G05B 19/4103** |
| (21) Anmeldenummer: **95931150.7** | (86) Internationale Anmeldenummer: **PCT/DE95/01280** |
| (22) Anmeldetag: **15.09.1995** | (87) Internationale Veröffentlichungsnummer: **WO 96/10221 (04.04.1996 Gazette 1996/15)** |

(54) **VERFAHREN ZUR KONTURFEHLERFREIEN BEGRENZUNG VON ACHSBESCHLEUNIGUNGEN**

METHOD OF RESTRICTING AXIAL ACCELERATIONS WITHOUT ERRORS IN CONTOURING

PROCEDE DE LIMITATION D'ACCELERATIONS AXIALES SANS ERREUR DE CONTOURNAGE

(84) Benannte Vertragsstaaten:
**AT CH DE ES FR GB SE**

(30) Priorität: **29.09.1994 DE 4434923**

(43) Veröffentlichungstag der Anmeldung:
**16.07.1997 Patentblatt 1997/29**

(73) Patentinhaber: **SIEMENS AKTIENGESELLSCHAFT 80333 München (DE)**

(72) Erfinder:
- **SPETH, Wolfgang D-71723 Grossbottwar (DE)**
- **WESTERMEYER, Wilhelm D-90425 Nürnberg (DE)**

(56) Entgegenhaltungen:
- **PATENT ABSTRACTS OF JAPAN vol. 17 no. 405 (P-1581) ,28.Juli 1993 & JP,A,05 073128 (FANUC LTD.) 26.März 1993,**
- **PATENT ABSTRACTS OF JAPAN vol. 15 no. 95 (P-1176) ,7.März 1991 & JP,A,02 308311 (OKI ELECTRIC IND. CO. LTD.) 21.Dezember 1990,**

## Beschreibung

Verfahren zur konturfehlerfreien Begrenzung von Achsbeschleunigungen

Die Erfindung bezieht sich auf ein Verfahren zur Geschwindigkeitsführung von elektrischen Antrieben.

Bei modernen industriellen Steuerungen zum Einsatz beispielsweise bei Werkzeugmaschinen und Robotern stellt sich häufig das Problem, daß das sollwertseitig in Form des Vorschubs vorgegebene Bahngeschwindigkeitsprofil die mögliche Achsgeschwindigkeit und Achsbeschleunigung überschreitet und sich dadurch der axiale Schleppfehler, ein Geschwindigkeitsfehler in Längsrichtung des Werkstückes, vergrößert. Dadurch resultiert an gekrümmten Konturen in der Regel auch ein Konturfehler am zu fertigenden Werkstück. Hinzu kommt, daß in der Nähe singulärer Bereiche, also unstetiger Stellen der Konturen wie Knickpunkten, die axiale Schleppfehlerüberwachung der Maschine auslöst und einen sofortigen Maschinenstopp verursacht. Da man in Anbetracht der heutzutage zu fertigenden feinsten Konturen im Rahmen enger Toleranzen bestrebt ist, diese auftretenden Nachformfehler durch einen axialen Schleppfehler zu minimieren, besteht die Notwendigkeit, die zugrundeliegende Achsgeschwindigkeit und Achsbeschleunigung soweit zu reduzieren, daß axiale Schleppfehler vermieden werden können.

Es ist bekannt, daß herkömmliche Verfahren zur Geschwindigkeitsführung zur Erfüllung dieser Erfordernisse in Werkzeugmaschinensteuerungen, soweit sie das Bahngeschwindigkeitsprofil glatten, nur entweder eine pauschale geschwindigkeitsunabhängige Bahnbeschleunigungsgrenze und Bahngeschwindigkeitsgrenze berücksichtigen oder aber diese unter stark vereinfachten Bedingungen aus dem Verlauf der Maschinenachsen oder Basisachsen ableiten. Diese beiden standardgemäß eingesetzten Verfahren der Geschwindigkeitsführung in Werkzeugmaschinensteuerungen besitzen jedoch den Nachteil, daß zum einen zur Vermeidung von axialen Schleppfehlern und dadurch bedingten Konturfehlern die zulässige pauschale Beschleunigungsgrenze entsprechend klein gewählt werden muß. Dadurch wird jedoch die Leistungsfähigkeit der Maschine nicht ausgenutzt. Zum anderen hat das oben angesprochene herkömmliche Verfahren zur Herleitung von einer Bahnbeschleunigungsgrenze und Bahngeschwindigkeitsgrenze zur Folge, daß letztere zu grob berechnet werden, um abrupt auftretende singuläre Bereiche zu erkennen. Die nötigen dynamischen Bahnbegrenzungen, die ein Auslösen der axialen Schleppfehlerüberwachung verhindern könnten, werden damit in der Nähe singulärer Bereiche nicht ausreichend genau bestimmt. Aus diesem Grund paßt der Maschinenbetreiber kleiner Teileprogramme den programmierten Vorschub in der Regel durch programmierbare Beschleunigungsgrenzen manuell an die Beschleunigungsmöglichkeiten seiner Maschine an. Eine solche Vorgehensweise besitzt jedoch den Nachteil, daß die manuelle Einjustierung des Geschwindigkeitsprofils im Formenbau sehr unökonomisch ist, da sehr umfangreiche Programme nur wenige Male abgefahren werden. Eine Alternative hierzu besteht darin, die Maschinenachsverlaufe zu approximieren. Dies geschieht in der Regel über Linearsätze (siehe dazu etwa DE-OS 36 23 070 bzw. EP-A-0 254 884). Letztere Vorgehensweise besitzt jedoch den Nachteil, daß der Programmaufwand dadurch erhöht wird, eine Werkzeugkorrektur nachträglich nicht mehr änderbar ist und eine Einspannkorrektur nur noch sehr begrenzt möglich ist.

Aus der JP 507 3128 ist ein Verfahren zur Führung der Vorschubgeschwindigkeit bekannt, welches ein abruptes Absenken der Vorschubgeschwindigkeit vermeidet. Maßnahmen zur optimalen Ausnutzung der Leistungsfähigkeit einer verwendeten Maschine bei gleichzeitiger Berücksichtigung von Geschwindigkeits- und Beschleunigungsgrenzen sind darin jedoch nicht offenbart.

Der Erfindung liegt daher die Aufgabe zugrunde, ein Verfahren zur Geschwindigkeitsführung so auszubilden, daß die oben dargestellten Nachteile wie Beschränkung der Leistungsfähigkeit der verwendeten Maschine, mehr Aufwand durch manuelle Anpassung sowie ein überhöhter Programmaufwand durch Approximation der Maschinenachsverlaufe vermieden werden können. Vielmehr sollen lokale Bahnbeschleunigungsgrenzen und Bahngeschwindigkeitsgrenzen aus den Maschinenachse so abgeleitet werden, daß die nötigen dynamischen Bahnbegrenzung auch in der Nähe singulärer Bereiche ausreichend genau bestimmt werden.

Gemäß der Erfindung wird diese Aufgabe durch folgende Merkmale gelöst:

1.1 der Geschwindigkeitsverlauf von Maschinenachsen wird bereits vor einer Interpolation approximativ bestimmt und anhand globaler Maschinenachsgeschwindigkeitsgrenzen und Maschinenachsbeschleunigungsgrenzen eine eventuell erforderliche lokale Bahngeschwindigkeitsgrenze und/oder lokale Bahnbeschleunigungsgrenze für jeden Satz an Steuerungsdaten abgeleitet,

1.2 die Schrittweite einer Abtastung zur Approximation ist dabei variabel und wird ständig an die Maschinenachsbewegungen angepaßt, indem Bereiche geringer Maschinenachsbelastung nur grob abgetastet werden kritische Bereiche hingegen fein abgetastet werden,

1.3 eine Vorschubgeschwindigkeit auf einer zu verfahrenden Bahn wird mit Ausnahme der durch die ermittelten lokalen Bahngeschwindigkeitsgrenzen und/oder lokalen Bahnbeschleunigungsgrenzen notwendigen Begrenzungen so lange dies im Rahmen der Maschinenachsbelastungsgrenzen möglich ist, auf einem vorgegebenen konstanten Wert geführt.

Eine erste vorteilhafte Ausgestaltung der vorliegenden Erfindung, welche unter anderem eine Realisierung mit besonders geringem Programm- und Verarbeitungsaufwand ermöglicht, zeichnet sich durch folgende Merkmale aus:

2.1 für die Approximation der tatsächlich auftretenden Geschwindigkeitsverläufe der Maschinenachsen wird die zu beschreibende Kontur anhand der Steuerungsdaten abgetastet und werden die Abtastpunkte über Polynome der Ordnung drei oder höher, insbesondere kubische Polynome, zu einem approximierten Profilspektrum verbunden,
2.2 aus den Polynomen wird in Abhängigkeit von den sich daraus ergebenden Bahnkennwerten eine auftretende Achsgeschwindigkeitsbelastung und Achsbeschleunigungsbelastung abgeleitet,
2.3 überschreitet oder unterschreitet eine ermittelte Achsgeschwindigkeitsbelastung und/oder Achsbeschleunigungsbelastung die globalen Maschinenachsgeschwindigkeitsgrenzen bzw. Maschinenachsbeschleunigungsgrenzen, so werden deren Werte in diesen Bereichen auf den jeweils überschrittenen oder unterschrittenen Grenzwert gesetzt.

Eine weitere vorteilhafte Ausgestaltung der Erfindung vereinfacht letztere besonders, indem sie folgendes Merkmal aufweist:

3.1 anstelle einer möglichst konstanten Vorschubgeschwindigkeit mit lokalen Begrenzungen wird das Minimum (M) eines approximierten Vorschubgeschwindigkeitsprofils bestimmt und mit einer konstanten Vorschubgeschwindigkeit auf diesem ermittelten Minimum über der ganzen Bahn verfahren.

Eine weitere vorteilhafte Ausgestaltung der Erfindung macht letztere besonders variabel und läßt einen flexiblen Einsatz zu, indem sie folgendes Merkmal aufweist:

4.1 Maschinenachswerte werden lediglich gemäß einer Grobinterpolation über die zu beschreibende Kontur ermittelt, so daß das Verfahren unabhängig von der jeweiligen Maschinenkinematik ist.

Die mit der Erfindung erzielten Vorteile bestehen insbesondere darin, daß eine Anpassung der beiden Bahnbeschleunigungsgrenzen und Bahngeschwindigkeitsgrenzen an die Kontur automatisiert wird und eine Begrenzung nur dort erfolgt, wo dies auch unbedingt nötig ist. Die Interpolation kann auf der Kontur arbeiten und den Vorschub auf der Kontur weitmöglichst einhalten. Die Geschwindigkeit des Werkzeuges wird erfindungsgemäß solange technologisch optimal geführt, wie dies ohne Überlastung der Antriebe möglich ist. Hinzu kommt, daß sich die aufgeführten Vorteile mit vorliegender Erfindung effektiv und besonders kostengünstig realisieren lassen.

Ein Ausführungsbeispiel der Erfindung ist in der Zeichnung dargestellt und wird im folgenden näher erläutert. Dabei zeigen:

FIG 1  Geschwindigkeitsverlauf in Basiskoordinaten,

FIG 2  approximierter Geschwindigkeitsverlauf in Maschinenachskoordinaten,

FIG 3  Beschleunigungsverlauf in Maschinenachskoordinaten,

FIG 4  Ablaufdiagramm zur konturfehlerfreien Begrenzung der Achsbeschleunigungen gemäß vorliegender Erfindung.

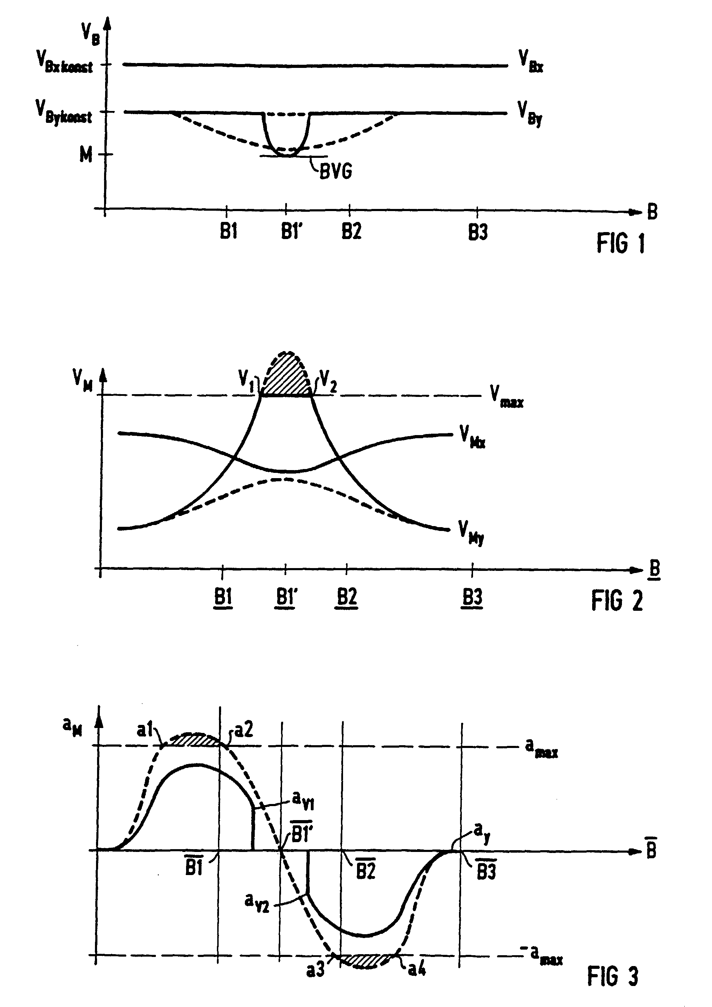

In der Darstellung gemäß FIG 1 ist ein Diagramm gezeigt, welches den Geschwindigkeitsverlauf beispielsweise des Werkzeuges einer Werkzeugmaschine in Basiskoordinaten, also den Koordinaten des zu bearbeitenden Werkstückes, darstellt. Die Abszisse beschreibt die Bahnlänge B, die Ordinate den Wert der Geschwindigkeit in Basiskoordinaten $V_B$. Dargestellt sind zwei Geschwindigkeitsverläufe $V_{Bx}$ und $V_{By}$. Diese beschreiben die Geschwindigkeit des Vorschubs in X- und Y-Richtung, mit dem ein Werkzeug das entsprechende Werkstück bearbeitet. Das erfindungsgemäße Verfahren kann jedoch jederzeit auf höhere Dimensionen angewendet werden, es ist lediglich der besseren Übersichtlichkeit halber in der Darstellung auf zwei Dimesionen beschränkt. Angestrebt wird ein möglichst konstanter Vorschub, was durch den linearen Verlauf der beiden Geschwindigkeiten $V_{Bx}$ auf dem vorgegebenen Wert $V_{Bxkonst}$ und $V_{By}$ auf dem Wert $V_{Bykonst}$ verdeutlich wird. Da diese Idealvorstellung in der Realität nicht immer verwirklicht werden kann, ergeben sich auch Abweichungen von diesen linearen Geschwindigkeitsverläufen. So dargestellt in zwei Fällen anhand von $V_{By}$. Einmal in Form einer gestrichelten Linie, in deren Verlauf die Geschwindigkeit $V_{By}$ zeitweilig erst linear, dann polynomial auf eine lokale Bahngeschwindigkeitsgrenze BVG abfällt und schließlich wieder linear auf $V_{Bykonst}$ ansteigt. Dieser Verlauf wird durch ein Überschreiten einer globalen Maschinenachsenbeschleunigungsgrenze bestimmt. Zum anderen anhand einer durchgezogenen Linie, die temporär aufgrund einer Überschreitung einer globalen Maschinenachsengeschwindigkeitsgrenze polynomial auf eine lokale Bahngeschwindigkeitsgrenze BVG abfällt. An den Übergangen treten hierbei deutliche Knicke auf. Durch den Verlauf jeder Kurve tritt jeweils ein Minimum M auf. Die Abszisse ist unterteilt in Intervalle B1, B2 und B3 sowie ein Zwischenintervall B1', welches das Intervall B1 nach B2 halbiert. Die lokale Bahngeschwindigkeitsgrenze BVG stellt sich exakt bei B1' an.

In der Darstellung gemäß FIG 2 ist ein Diagramm gezeigt, in dem der approximierte Geschwindigkeitsverlauf des elektrischen Antriebes in Maschinenachskoordinaten wiedergegeben ist. Dargestellt sind wiederum die Geschwindigkeitsverläufe in X- und Y-Richtung $V_{Mx}$ und $V_{My}$. Die Abszisse beschreibt die Bahnlänge $\underline{B}$, wobei diese in mehrere Intervalle $\underline{B1}$, $\underline{B2}$, $\underline{B3}$, und ein Zwischenintervall $\underline{B1}'$ unterteilt ist. Die Ordinate beschreibt den Geschwindigkeitswert in Maschinenachsenkoordinaten. Der Wert $V_{max}$, dargestellt anhand einer gestrichelten Linie, stellt eine globale Maschinengeschwindigkeitsgrenze für $V_{My}$ dar, die vom Geschwindigkeitsverlauf des elektrischen Antriebes nicht überschritten werden darf. Legt man einen möglichst über die ganze Bahn zu verfahrenden konstanten Vorschub zugrunde, so verläuft die Geschwindigkeit $V_{Mx}$ in den Intervallen $\underline{B1}$ bis $\underline{B3}$ innerhalb des zulässigen Geschwindigkeitæbereiches. Die Geschwindigkeit VMy hingegen überschreitet im Intervall von $\underline{B1}$ nach $\underline{B2}$ die globale Maschinengeschwindigkeitsgrenze $V_{max}$ und erreicht zum Zwischenintervall $\underline{B1}'$ ihren Maximalwert, welcher durch einen gepunkteten Verlauf skizziert ist. Die Fläche unter diesem Verlauf ist im Bereich der Grenzwertüberschreitung hervorgehoben. Ein korrigierter, im zulässigen Geschwindigkeitsbereich liegender Geschwindigkeitsverlauf von $V_{My}$ ist durch einen durchgezogenen Kurvenzug dargestellt, der weitgehend dem eben beschriebenen Idealverlauf folgt, jedoch nicht den Grenzbereich überschreitet, sondern in dieser Phase zwischen den Punkten V1 und V2 auf den Grenzwert $V_{max}$ begrenzt wird. Ein zweiter zulässiger Geschwindigkeitsverlauf von VMy ist in Form eines gestrichelten Kurvenzuges dargestellt und beruht auf einer Korrektur aufgrund einer Überschreitung der globalen Maschinenbeschleunigungsgrenzen.

In der Darstellung gemäß FIG 3 ist ein Diagramm gezeigt, in dem die Beschleunigung $a_M$ für den Geschwindigkeitsverlauf $V_{My}$ aus FIG 2 über die Bahnlänge $\overline{B}$ dargestellt ist. Die Bahnlänge, ist wie schon in den beiden vorherigen Figuren in Intervalle $\overline{B1}$, $\overline{B2}$ und $\overline{B3}$ sowie das Zwischenintervall $\overline{B1'}$ unterteilt. Auf der Ordinate ist im positiven Beschleunigungsbereich sowie im negativen Beschleunigungsbereich jeweils eine globale Maschinenachsbeschleunigungsgrenze $a_{max}$ bzw. $-a_{max}$ gezeigt. Der Beschleunigungsverlauf $a_y$, welcher durch eine durchgezogene Linie dargestellt ist, entspricht dem Geschwindigkeitsverlauf $V_{My}$, welcher in FIG 2 zeitweise auf der dortigen globale Maschinengeschwindigkeitsgrenze verläuft und ebenfalls in Form einer durchgezogenen Linie dargestellt ist. Dabei steigt die Beschleunigung in einem zur Veranschaulichung dargestellten Fall sinusförmig bis zum Erreichen eines lokalen Maximums an, fällt anschließend bis zum Punkt $a_{V1}$ ab. Dort fällt die Beschleunigung aufgrund der Geschwindigkeitskorrektur zwischen V1 und V2 in FIG 2 abrupt auf NULL ab. Derselbe quasi an der Abszisse gespiegelte Verlauf wird im negativen Beschleunigungsbereich beschrieben. Im Punkt V2 fällt die Beschleunigung abrupt auf $a_{V2}$ ab, wobei $a_{V2} = -a_{V1}$ gilt, und erreicht dann erneut die Abszisse mit einer Beschleunigung von NULL.

In einem zweiten Verlauf der Beschleunigung in Maschinenachskoordinaten $a_y$, welcher in Form einer gestrichelten Kurve dargestellt ist, ist ein Fall skizziert, in dem $a_y$ die globalen Beschleunigungsgrenze $a_{max}$ und $-a_{max}$ über- bzw- unterschreitet. Analog der Geschwindigkeitüberschreitung in FIG 2 ist der Verlauf von ay in diesen Bereichen a1 bis a2 bzgl. der Überschreitung und a3 bis a4 bzgl. der Unterschreitung auf die entsprechende Beschleunigungsgrenze $a_{max}$ bzw. $-a_{max}$ beschränkt. Exakt bei $\overline{B1}'$ schneidet $a_y$ in diesem zweiten Fall die Abszisse. Dieser gestrichelt geführte, in der maximalen Beschleunigung begrenzte Beschleunigungsverlauf wirkt sich auf den entsprechenden Geschwindigkeitsverlauf, nämlich den in FIG 2 ebenfalls gestrichelt dargestellten Verlauf von $V_{My}$, so aus, daß dieser aufgrund der lokalen Beschleunigungsbeschränkung ebenfalls nicht mehr über die zugehörigen globale Maschinenachsengeschwindigkeitsgrenze $V_{max}$ hinausgeht. Beide Bereiche, die außerhalb der Beschleunigungsgrenzen liegen, sind in FIG 3 grafisch hervorgehoben.

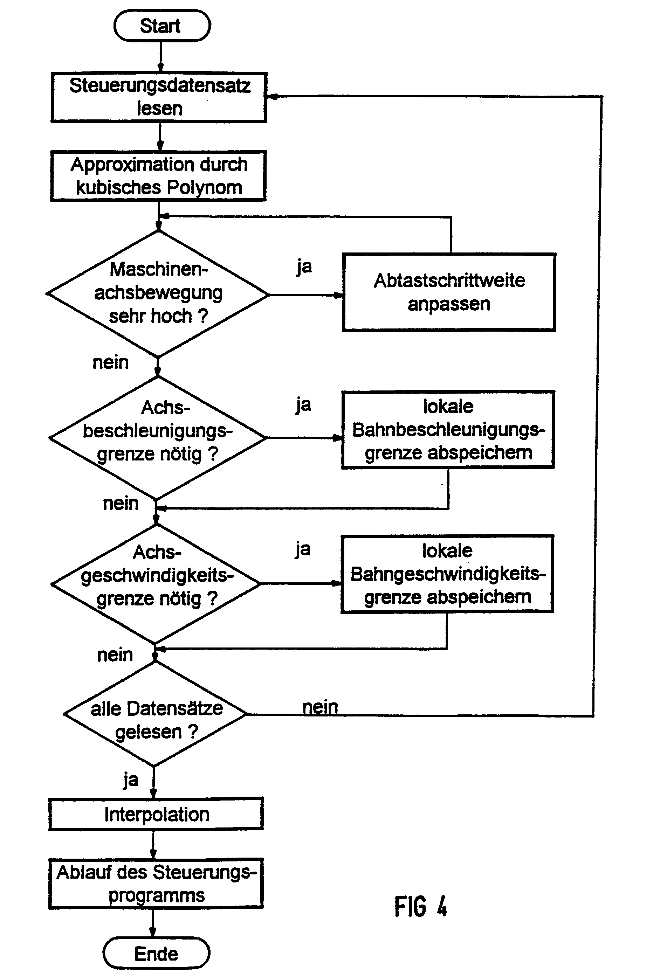

In der Darstellung gemäß FIG 4 ist ein Ablaufdiagramm gezeigt, welches die einzelnen erfindungsgemäßen Verfahrensschritte darstellt. Nach dem Start wird in einem ersten Verarbeitungsschritt ein Steuerungsdatensatz gelesen. Darin anschließend erfolgt anhand der darin enthaltenen Abtastpunkte eine Approximation durch ein kubisches Polynom oder ein solches höherer Ordnung gemäß einer Grobinterpolation. In einer ersten Verzweigung wird überprüft, ob die daraus abgeleiteten Maschinenachsbewegungen sehr hoch sind, d.h. ob sie außerhalb der globalen Maschinenachsengrenzen von Geschwindigkeit $V_{max}$ aus FIG 2, und Achsbeschleunigung, $a_{max}$ bzw. $-a_{max}$ aus FIG 3, liegen oder aber innerhalb des aktuellen Taktes diese überschreiten können. Ist dies der Fall, so wird die Abtastschrittweite angepaßt und vor die erste Verzweigung zurückgesprungen. Falls nicht erforderlich, erfolgt eine zweite Verzweigung, in der überprüft wird, ob eine Achsbeschleunigungsgrenze eingefügt werden muß. Sofern dies der Fall ist, wird eine dadurch bedingte lokale Bahnbeschleunigungsgrenze ermittelt und abgespeichert. In beiden Fallen wird daran anschließend mit einer dritten Verzweigung fortgefahren. In dieser wird überprüft, ob eine Achsgeschwindigkeitsgrenze notwendig ist. Falls ja, so wird eine dazugehörige lokale Bahngeschwindigkeitsgrenze ermittelt und abgespeichert. Ebenfalls wird in beiden Fällen zu einer vierten Verzweigung gesprungen, in der überprüft wird, ob alle Datensätze bereits gelesen wurden. Ist dies nicht der Fall, so wird mit dem ersten Verarbeitungsschritt, nämlich dem Lesen eines weiteren Steuerungsdatensatzes fortgefahren. Sind alle Datensätze gelesen, so erfolgt daran anschließend das standardgemäße Verfahren zur Abarbeitung von Steuerungsdatensätzen, indem in einem weiteren Verarbeitungsschritt die zu beschreibende Bahn interpoliert wird und in einem daran anschließenden Verarbeitungsschritt der Ablauf des Steuerprogrammes erfolgt. Mit Ablauf des Steuerprogrammes wird das Verfahren beendet.

Um eine konturfehlerfreie Begrenzung der Achsbeschleunigung gemäß der vorliegenden Erfindung zu erreichen, bei der so lange und so weit wie möglich mit einer konstanten Vorschubgeschwindigkeit $V_{Bxkonst}$ bzw. $V_{Bykonst}$ verfahren werden kann, müssen die nötigen dynamischen Bahnbegrenzungen in der Nähe singularer bzw. nicht-tangentialer Bereiche ausreichend genau bestimmt werden. Aus diesem Grund wird erfindungsgemäß der Verlauf der Maschinenachsen vor der Interpolation näherungsweise bestimmt und anhand der Maschinenachsbeschleunigungsgrenzen $a_{max}$ bzw. $-a_{max}$ und Maschinenachsgeschwindigkeitsgrenzen $V_{max}$ eine eventuell erforderliche lokale Bahngeschwindigkeitsgrenze BVG oder lokale Bahnbeschleunigungsgrenze für jeden Steuerungsdatensatz abgeleitet. Für die Approximation der Maschinenachsverläufe, welche unter der Maxime eines konstanten Vorschubs genähert werden sollen, wird die Kontur anhand der Abtastpunkte der Steuerungsdatensätze über der Bahnlänge B bzw. $\underline{B}$, $\overline{B}$ gemäß einer Grobinterpolation ermittelt und werden die einzelnen Abtastpunkte in definierte Interpolationsintervallen B1, B2, B3 über kubische Polynome oder solche höherer Ordnung miteinander verbunden (siehe dazu Schrüfer, E.: Signalverarbeitung; Numerische Verarbeitung digitaler Signale, München, Wien; Hanser Verlag 1990, S. 74ff.). Aus den kubischen Polynomen wird abhängig von den dabei ermittelten Kennwerten der Geschwindigkeitsverlauf in Maschinenachskoordinaten $V_{Mx}$ und $V_{My}$ berechnet, welcher sich bei einem angenommenen konstanten Vorschub des Geschwindigkeitsverlaufes in Basiskoordinaten $V_{Bx}$ und $V_{By}$ ergibt. Die in FIG 3 dargestellten Kurvenverläufe beruhen auf einer Transformation zwischen dem Basis- und dem Maschinenachskoordinatensystem. Aus der dabei ermittelten auftretenden Achsgeschwindigkeitsbelastung wird darüber hinaus die zugrundeliegende Achsbeschleunigungsbelastung abgeleitet, welche der Einfachheit halber in FIG 3 nur für die Bewegung in Y-Richtung anhand des Verlaufes $a_y$ dargestellt ist. Dabei werden sowohl der Verlauf der Achsgeschwindigkeitsbelastung $V_{Mx}$ und $V_{My}$ sowie die Achsbeschleunigungsbelastung $a_y$ hinsichtlich einer globalen Maschinengeschwindigkeitsgrenze $V_{max}$ und globaler Maschinenachsbeschleunigungsgrenzen $a_{max}$ bzw. $-a_{max}$ zu den jeweiligen Interpolationsintervallen B1, B2, B3 untersucht. Wird dabei festgestellt, daß die Maschinenachsbewegungen entweder die globale Maschinengeschwindigkeitsgrenze $V_{max}$ oder die globalen Maschinenachsbeschleunigungsgrenze $a_{max}$ bzw. $-a_{max}$ überschreiten bzw. unterschreiten oder aber der Verlauf der Maschinenachsbewegung aufgrund der ermittelten Werte im aktuellen bzw. sich anschließenden Intervall die genannten Maschinengrenzen zu überschreiten oder unterschreiten droht, so wird die Abtastschrittweite an die Maschinenachsbewegung angepaßt, wodurch auf diese Weise kritische Intervalle erkannt werden und grobe Intervalle feiner abgetastet werden. Ein solcher Fall tritt im Intervall von B1 nach B2 auf, weshalb ein Zwischenintervall B1' als weiterer Abtastpunkt aufgenommen wird. Dadurch werden singuläre Bereiche, die unstetige Stellen wie Sprünge bzw. Knickpunkte enthalten, sicher erkannt und fein abgetastet. Bereiche geringer Maschinenachsbelastung werden nur grob abgetastet und es wird keine unnötige Rechenzeit verbraucht. Die Abtastung berücksichtigt somit selbständig das über kubische Polynome oder solche höherer Ordnung gut approximierte Profilspektrum.

Um mit konstanter Vorschubgeschwindigkeit $V_{Bxkonst}$ und $V_{Bykonst}$ im Basiskoordinatensystem arbeiten zu können, müssen die Schlittengeschwindigkeiten in X- bzw. Y-Richtung, also der Geschwindigkeitsverlauf in Maschinenachskoordinaten, in der Regel ständig wechseln. Wichtig ist, daß sie im Rahmen der Maschinenbelastungsgrenzen liegen, da sonst Schleppfehler, die Konturfehler nach sich ziehen, auftreten können. Aus diesem Grunde soll erfindungsgemäß der Vorschub nur solange konstant geführt werden, wie dies im Rahmen der Maschinenachsbelastungsgrenzen möglich ist. Andernfalls muß die Vorschubgeschwindigkeit angepaßt werden. Eine solche Notwendigkeit tritt in einem ersten Fall, nämlich dem durchgezogenen Kurvenverlauf von $V_{My}$ im Intervall von B1 nach B2 auf. Da der approximierte Geschwindigkeitsverlauf in Maschinenachskoordinaten in Y-Richtung $V_{My}$ die globale Maschinengeschwindigkeitsgrenze $V_{max}$ überschreitet, z.B. aufgrund eines zu beschreibenden Knickes in der Bahnführung, muß die Achsgeschwindigkeit in Y-Richtung beschränkt werden und eine erforderliche Bahngeschwindigkeitsgrenze für diesen Satz abgeleitet werden. Der sich daraus ergebende auf die globale Maschinengeschwindigkeitsgrenze $V_{max}$ angepaßte Verlauf der Achsgeschwindigkeit in Y-Richtung $V_{My}$ ergibt sich, indem der hervorgehobene Überschreitungsbereich zwisch V1 und V2 abgeschnitten und $V_{My}$ auf $V_{max}$ begrenzt wird. Da der entsprechende Beschleunigungsverlauf in Maschinenachsenkoordinaten $a_y$, in FIG 3 ebenfalls in Form einer durchgezogenen Kurve dargestellt, im skizzierten Fall nicht auch noch außerhalb der globalen Maschinenachsbeschleunigungsgrenzen verläuft, ist diesbezüglich keine weitere Korrektur erforderlich. Jedoch hat die Geschwindigkeitskorrektur bei $V_{My}$ zur Folge, daß sowohl bei V1 als auch bei V2 die Beschleunigung abrupt auf NULL fällt.

Diese Vorgehensweise hat zwar zur Folge, daß eine konstante Vorschubgeschwindigkeit in Basiskoordinaten in Y-Richtung im Intervall von B1 nach B2 nicht mehr aufrecht erhalten werden kann, sondern eine lokale Bahngeschwindigkeitsgrenze BVG zum Zwischenintervall B1' akzeptiert werden muß. Aufgrund der direkten Abtrennung des Überschreitungsbereiches stellt sich auch bei $V_{By}$ ein sprunghafter Übergang ein, wobei sich der Verlauf der lokalen Bahngeschwindigkeitsgrenze BVG in Abhängigkeit der zugrunde gelegten Koordinatentransformation als Differenz berechnet und in der Regel einen inversen Verlauf analog zum abgetrennten Überschreitungsbereiches beschreibt. So ergibt sich daraus jedoch der Vorteil, daß sich ein andernfalls einstellender axialer Schleppfehler und der damit an gekrümmten Konturen verbundene Konturfehler am Werkstück vermieden werden kann.

Neben der globalen Maschinengeschwindigkeitsgrenze $V_{max}$ kann sich auch aus dem approximierten Beschleunigungsverlauf in Maschinenachskoordinaten eine Notwendigkeit zur Ableitung einer erforderlichen lokalen Bahngeschwindigkeits- und/oder Bahnbeschleunigungsgrenze ergeben. So wird anhand des zweiten, in FIG 3 anhand eines gestrichelten Kurvenzuges dargestellten Verlaufes von ay deutlich, daß der approximierte Beschleunigungsverlauf in Y-Richtung bereits im Intervall $\overline{B1}$ die obere Maschinenachsbeschleunigungsgrenze $a_{max}$ überschreitet. Gleiches tritt im negativen Beschleunigungsbereich für $\overline{B2}$ auf, wo die negative Maschinenachsbeschleunigungsgrenze $-a_{max}$ unterschritten wird. Die dadurch auftretende Maschinenbeschleunigungsbelastung $a_y$ hätte somit Maschinenachsbeschleunigungen zur Folge, die eventuell Konturfehler nach sich ziehen können. Da es sich somit um ein kritisches Intervall handelt, wird die Abtastschrittweite entsprechend der hohen Maschinenachsbewegung angepaßt und ein Zwischenintervall $\overline{B1}'$ eingefügt. Auch vor dem Intervall $\overline{B1}$ und nach $\overline{B2}$ ist in diesem Fall eine Verringerung der Abtastschrittweite denkbar, der besseren Übersichtlichkeit halber jedoch nicht dargestellt. Aufgrund des Überschreitens der globalen Maschinenachsbeschleunigungsgrenzen $a_{max}$ bzw. $-a_{max}$ wird zwischen den Intervallpunkten a1 und a2 jeweils die Beschleunigung lokal auf das Maximum und zwischen den Intervallpunkten a3 und a4 jeweils lokal auf das Minimum begrenzt. Den erforderlichen korrigierten Beschleunigungsverlauf $a_y$ beschreibt eine gestrichelte Linie in FIG 3, die von a2 nach a3 mit negativer Steigung verläuft und exakt in $\overline{B1}'$ die Abszisse schneidet. Auf den Geschwindigkeitsverlauf in Maschinenachsenkoordinaten $V_{My}$ wirkt sich diese Beschränkung der Beschleunigung $a_y$ so aus, daß $V_{My}$ zwischen a1 und a2 sowie zwischen a3 und a4 jeweils linear verläuft. Für die Vorschubgeschwindigkeit in Basiskoordinaten hat dieser Fall zur Folge, daß eine lokale Bahngeschwindigkeitsbegrenzung und/oder Bahnbeschleunigungsbegrenzung auftritt, indem $V_{By}$ zwischen al und a4 vom gewünschten konstanten Verlauf abweicht. Dabei beginnt und endet die Abweichung aufgrund der linearen Geschwindigkeitszunahme von $V_{My}$ nicht-tangential.

Es sei an dieser Stelle darauf hingewiesen, daß die Kurvenverläufe für beide Fälle nicht maßstabsgetreu zueinander dargestellt sind, sondern es handelt sich lediglich um Prinzipskizzen.

Die erfindungsgemäße Berücksichtigung sowohl von globalen Maschinengeschwindigkeitsgrenzen $V_{max}$ als auch von globalen Maschinenachsbeschleunigungsgrenzen $a_{max}$ bzw. $-a_{max}$ und die erforderlichenfalls daraus abgeleiteten lokalen Bahnbeschleunigungs- und Bahngeschwindigkeitsgrenzen haben zur Folge, daß Begrenzungen und somit Einschränkungen der Leistungsfähigkeit der Maschine nur dort vorgenommen werden wo sie unbedingt nötig sind. Es wird somit sowohl eine optimale Ausnutzung der Leistungsfähigkeit des Antriebes erreicht, als auch das Auftreten von Konturfehlern sowie ein Auslösen der axialen Schleppfehlerüberwachung, welche zu einem sofortigen Maschinenstop führen, ausgeschlossen.

In einer vereinfachten Ausgestaltung der vorliegenden Erfindung geht man derart vor, daß anstelle einer möglichst konstanten Vorschubgeschwindigkeit und lokalen Begrenzungen das Minimum M eines solchen Vorschubgeschwindigkeitsprofils bestimmt wird. Anschließend verfährt man die gesamte Bahn konstant mit einer Vorschubgeschwindigkeit von M. Diese Vorgehensweise ist weniger rechenintensiv und einfacher zu implementieren. Sie gewährleistet jedoch trotzdem, daß weder die globale Maschinenachsgeschwindigkeitsgrenze, noch die globale Maschinenachsbeschleunigungsgrenze überschritten werden. Da das Verfahren gemäß der vorliegenden Erfindung möglichst flexibel und variabel gehalten werden soll, werden die Maschinenachswerte gemäß einer Grobinterpolation über die zu beschreibende Kontur bestimmt. Das Verfahren ist damit unabhängig von der jeweiligen Maschinenkinematik und bietet desweiteren die Möglichkeit einer Berücksichtigung von Transformationen sowie Werkzeuglangen und Radiuskorrekturen. Darüber hinaus läßt sich jedes beliebige Verfahren zur Kurveninterpolation bzw. Feininterpolation heranziehen.

## Patentansprüche

1. Verfahren zur Geschwindigkeitsführung von elektrischen Antrieben, mit folgenden Verfahrensschritten:

　　1.1 der Geschwindigkeitsverlauf von Maschinenachsen ($V_{Mx}$, $V_{My}$) wird bereits vor einer Interpolation approximativ bestimmt und anhand globaler Maschinenachsgeschwindigkeitsgrenzen ($V_{max}$) und Maschinenachsbeschleunigungsgrenzen ($a_{max}$, $-a_{max}$) eine eventuell erforderliche lokale Bahngeschwindigkeitsgrenze (BVG) und/oder lokale Bahnbeschleunigungsgrenze für jeden Satz an Steuerungsdaten abgeleitet,

　　1.2 die Schrittweite einer Abtastung zur Approximation ist dabei variabel und wird ständig an die Maschinenachsbewegungen angepaßt, indem Bereiche geringer Maschinenachsbelastung nur grob abgetastet werden (B1,B2,B3) kritische Bereiche (B1') hingegen fein abgetastet werden,

　　1.3 eine Vorschubgeschwindigkeit auf einer zu verfahrenden Bahn wird mit Ausnahme der durch die ermittelten lokalen Bahngeschwindigkeitsgrenzen (BVG) und/oder lokalen Bahnbeschleunigungsgrenzen notwendigen Begrenzungen so lange dies im Rahmen der Maschinenachsbelastungsgrenzen möglich ist, auf einem vorgegebenen konstanten Wert ($V_{Bxkonst}$, $V_{Bykonst}$) geführt.

**2.** Verfahren nach Anspruch 1, mit folgenden weiteren Verfahrensschritten:

2.1 für die Approximation der tatsächlich auftretenden Geschwindigkeitsverläufe der Maschinenachsen ($V_{Mx}$, $V_{My}$) wird die zu beschreibende Kontur anhand der Steuerungsdaten abgetastet und werden die Abtastpunkte über Polynome der Ordnung drei oder höher, insbesondere kubische Polynome, zu einem approximierten Profilspektrum verbunden,

2.2 aus den Polynomen wird in Abhängigkeit von den sich daraus ergebenden Bahnkennwerten eine auftretende Achsgeschwindigkeitsbelastung und Achsbeschleunigungsbelastung ($a_y$) abgeleitet,

2.3 überschreitet oder unterschreitet eine ermittelte Achsgeschwindigkeitsbelastung und/oder Achsbeschleunigungsbelastung ($a_y$) die globalen Maschinenachsgeschwindigkeitsgrenzen ($V_{max}$) bzw. Maschinenachsbeschleunigungsgrenzen ($a_{max}$, $-a_{max}$), so werden deren Werte in diesen Bereichen - auf den jeweils überschrittenen oder unterschrittenen Grenzwert ($V_{max}$, $a_{max}$, $-a_{max}$) gesetzt.

**3.** Verfahren nach Anspruch 1 oder 2, mit folgendem weiteren Verfahrensschritt:

3.1 anstelle einer möglichst konstanten Vorschubgeschwindigkeit mit lokalen Begrenzungen wird das Minimum (M) eines approximierten Vorschubgeschwindigkeitsprofils bestimmt und mit einer konstanten Vorschubgeschwindigkeit auf diesem ermittelten Minimum über der ganzen Bahn verfahren.

**4.** Verfahren nach einem der vorstehenden Ansprüche, mit folgendem weiteren Verfahrensschritt:

4.1 Maschinenachswerte werden lediglich gemäß einer Grobinterpolation über die zu beschreibende Kontur ermittelt, so daß das Verfahren unabhängig von der jeweiligen Maschinenkinematik ist.

**Claims**

1. Method for the velocity control of electric drives, having the following method steps:

    1.1 the velocity characteristic of machine axes ($V_{Mx}$, $V_{My}$) is already determined approximately before an interpolation, and a possibly required local path velocity limit (BVG) and/or local path acceleration limit is derived for each control data record with the aid of global machine axis velocity limits ($V_{max}$) and machine axis acceleration limits ($a_{max}$, $-a_{max}$),

    1.2 the scanning increment for the approximation is variable in this case and is continuously adapted to the machine axis movements by scanning regions of low machine axis loading only coarsely (B1, B2, B3) while scanning critical regions (B1'), by contrast, finely,

    1.3 except for the limitations required by the local path velocity limits (BVG) and/or local path acceleration limits which have been determined, a feed rate along a path to be traversed is held for as long as is possible within the scope of the machine axis loading limits at a prescribed constant value ($V_{Bxconst}$, $V_{Byconst}$).

2. Method according to Claim 1, having the following further method steps:

    2.1 for the approximation of the actually occurring velocity characteristics of the machine axes ($V_{Mx}$, $V_{My}$), the contour to be described is scanned with the aid of the control data, and the scanned points are joined to form an approximated profile spectrum by polynomials of the order of three or higher, in particular cubic polynomials,

    2.2 the polynomials are used to derive, as a function of the resulting characteristic path values, an axial velocity loading and axial acceleration loading ($a_y$) which occur,

    2.3 if an axial velocity loading and/or axial acceleration loading ($a_y$) determined overshoots or undershoots the global machine axis velocity limits ($V_{max}$) or machine axis acceleration limits ($a_{max}$, $-a_{max}$), their values in these regions are set to the limiting value ($V_{max}$, $a_{max}$, $-a_{max}$) respectively overshot or undershot.

3. Method according to Claim 1 or 2, having the following further method step:

    3.1 instead of a feed rate with local limits which is as constant as possible, the minimum (M) of an approximated feed rate profile is determined, and traversing is performed at a constant feed rate over the entire path at this determined minimum.

**4.** Method according to one of the preceding claims, having the following further method step:

4.1 machine axis values are determined only in accordance with a coarse interpolation over the contour to be described, with the result that the method is independent of the respective machine kinematics.

## Revendications

**1.** Procédé pour la commande de vitesse de dispositifs moteurs électriques, comprenant les étapes suivantes :

1.1 on détermine déjà approximativement la courbe de vitesse d'axes de machine ($V_{Mx}$, $V_{My}$) avant même une interpolation et on déduit à l'aide de limites globales de vitesse d'axes de machine ($V_{max}$) et de limites globales d'accélération d'axes de machine ($a_{max}$, $-a_{max}$) une limite locale de vitesse sur trajectoire (BVG) éventuellement nécessaire et/ou une limite locale d'accélération sur trajectoire éventuellement nécessaire pour chaque jeu de données de commande,

1.2 ce faisant, le pas d'une analyse pour l'approximation est variable et on l'adapte en permanence aux mouvements d'axes de machine en analysant seulement grossièrement des zones de petite charge d'axes de machine (B1, B2, B3) mais en analysant finement des zones critiques (B1'),

1.3 on commande une vitesse d'avance sur une trajectoire à parcourir, à l'exception des limitations nécessaires à cause des limites locales de vitesse sur trajectoire (BVG) déterminées et/ou des limites locales d'accélération sur trajectoire déterminées, à une valeur constante prescrite ($V_{Bxkonst}$, $V_{Bykonst}$) aussi longtemps que ceci est possible dans le cadre des limites de charge d'axes de machine.

**2.** Procédé selon la revendication 1, comprenant les étapes supplémentaires suivantes :

2.1 pour l'approximation des courbes de vitesse, apparaissant réellement, des axes de machine ($V_{Mx}$, $V_{My}$), on analyse à l'aide des données de commande le contour à décrire et on relie les points d'analyse par l'intermédiaire de polynômes du troisième degré ou de degré supérieur, notamment de polynômes cubiques, en un spectre de profil approché,

2.2 à partir des polynômes, on déduit en fonction des valeurs caractéristiques de trajectoire résultantes une charge de vitesse d'axes apparaissant et une charge d'accélération d'axes apparaissant ($a_y$),

2.3 si une charge de vitesse d'axes déterminée et/ou une charge d'accélération d'axes déterminée ($a_y$) est supérieure ou inférieure aux limites globales de vitesse d'axes de machine ($V_{max}$) ou aux limites globales d'accélération d'axes de machine ($a_{max}$, $-a_{max}$), on règle leurs valeurs dans ces zones à la valeur limite ($V_{max}$, $a_{max}$, $-a_{max}$) respectivement dépassée par valeur supérieure ou inférieure.

**3.** Procédé selon la revendication 1 ou 2, comprenant l'étape supplémentaire suivante :

3.1 à la place de la vitesse d'avance la plus constante possible avec des limitations locales, on détermine le minimum (M) d'un profil de vitesse d'avance approché et on fonctionne sur toute la trajectoire avec une vitesse d'avance constante égale à ce minimum déterminé.

**4.** Procédé selon l'une des revendications précédentes, comprenant l'étape supplémentaire suivante :

4.1 on détermine des valeurs d'axes de machine simplement selon une interpolation grossière sur le contour à décrire de telle sorte que le procédé est indépendant de la cinématique respective de la machine.

FIG 1

FIG 2

FIG 3

```
                    ┌──────────┐
                    │  Start   │
                    └──────────┘
                         │
                         ▼
            ┌─────────────────────────┐
            │  Steuerungsdatensatz    │◀───────────────────┐
            │        lesen            │                    │
            └─────────────────────────┘                    │
                         │                                 │
                         ▼                                 │
            ┌─────────────────────────┐                    │
            │   Approximation durch   │                    │
            │    kubisches Polynom    │                    │
            └─────────────────────────┘                    │
                         │◀──────────────────────┐         │
                         ▼                        │         │
                   ╱╲                             │         │
                  ╱  ╲      ja    ┌──────────────────────┐  │
                 ╱ Maschinen-╲────▶│   Abtastschrittweite │  │
                ╱ achsbewegung╲    │       anpassen       │  │
                ╲  sehr hoch ? ╱   └──────────────────────┘  │
                 ╲           ╱                               │
                  ╲         ╱                                │
                   ╲       ╱                                 │
                    nein  ▼                                  │
                   ╱╲                                        │
                  ╱  ╲       ja    ┌──────────────────────┐  │
                 ╱ Achs-   ╲──────▶│       lokale         │  │
                ╱ beschleuni-╲     │ Bahnbeschleunigungs- │  │
                ╲ gungsgrenze╱     │  grenze abspeichern  │  │
                 ╲ nötig ?  ╱      └──────────────────────┘  │
                  ╲       ╱◀─────────────────────┘           │
                   nein  ▼                                   │
                   ╱╲                                        │
                  ╱  ╲       ja    ┌──────────────────────┐  │
                 ╱ Achs-   ╲──────▶│       lokale         │  │
                ╱ geschwindig-╲    │ Bahngeschwindigkeits-│  │
                ╲ keitsgrenze ╱    │  grenze abspeichern  │  │
                 ╲ nötig ?  ╱      └──────────────────────┘  │
                  ╲       ╱◀─────────────────────┘           │
                   nein  ▼                                   │
                   ╱╲                                        │
                  ╱  ╲      nein                             │
          nein  ╱ alle Daten-╲──────────────────────────────┘
                ╲ sätze      ╱
                 ╲ gelesen ? ╱
                  ╲        ╱
                   ╲      ╱
                    ja   ▼
            ┌─────────────────────────┐
            │      Interpolation      │
            └─────────────────────────┘
                         │
                         ▼
            ┌─────────────────────────┐
            │  Ablauf des Steuerungs- │
            │       programms         │
            └─────────────────────────┘
                         │
                         ▼
                    ┌──────────┐
                    │   Ende   │
                    └──────────┘
```

FIG 4